(19) **Europäisches Patentamt / European Patent Office / Office européen des brevets**

(11) **EP 1 273 885 B1**

(12) **EUROPÄISCHE PATENTSCHRIFT**

(45) Veröffentlichungstag und Bekanntmachung des Hinweises auf die Patenterteilung:
**21.01.2009 Patentblatt 2009/04**

(51) Int Cl.:
**G01C 21/36** *(2006.01)*

(21) Anmeldenummer: **02010006.1**

(22) Anmeldetag: **04.05.2002**

(54) **Verfahren zum Bewegen der Darstellung von Bilddaten und/oder eines Anzeigeelements auf einer zweidimensionalen Wiedergabeeinrichtung**

Method for moving the presentation of image data and/or a display element on a two-dimensional display arrangement

Procédé pour déplacer la représentation des données d'image et/ou d'un élément d'affichage sur un dispositif d'affichage bidimensionnel

(84) Benannte Vertragsstaaten:
**DE FR GB IT**

(30) Priorität: **04.07.2001 DE 10132453**

(43) Veröffentlichungstag der Anmeldung:
**08.01.2003 Patentblatt 2003/02**

(73) Patentinhaber: **ROBERT BOSCH GMBH**
**70442 Stuttgart (DE)**

(72) Erfinder: **Kossira, Martin**
**71672 Marbach am Neckar (DE)**

(56) Entgegenhaltungen:
**EP-A- 1 052 565        EP-A- 1 087 359**
**FR-A- 2 772 911**

EP 1 273 885 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Stand der Technik

Die Erfindung betrifft ein Verfahren zum Bewegen der Darstellung von Bilddaten und/oder der Darstellung eines Anzeigeelements auf einer zweidimensionalen Wiedergabeeinrichtung mit Hilfe eines Dreh-Drückgebers, der mit den Bedienfunktionen Drehen und Drücken ausgestattet ist.

Ein derartiges Verfahren kann beispielsweise zum Verschieben einer auf einem Monitor dargestellten geografischen Karte eingesetzt werden oder zum Bewegen eines Anzeigeelements, mit dem bestimmte Punkte auf einer Bilddarstellung, wie z.B. einer geografischen Karte, ausgewählt werden sollen.

Viele der aus der Praxis bekannten Fahrerinformationssysteme umfassen ein Navigationssystem, das dem Fahrer Weginformationen in Form einer geografischen Karte zur Verfügung stellen kann. Diese geografische Karte bzw. ein geeigneter Kartenausschnitt wird auf einem Monitor im Cockpit des Fahrzeugs dargestellt. Die bekannten Fahrerinformationssysteme sind häufig mit einem Dreh-Drückgeber zur Menüsteuerung und Eingabe ausgestattet. Der Dreh-Drückgeber wird außerdem auch zur Bewegung der Karte oder des Anzeigeelements auf dem Monitor eingesetzt, wenn kein zusätzliches zweidimensionales Bedienelement, wie z.B. ein Joystick oder eine Kreuzwippe, zur Verfügung steht.

Bei den bekannten Fahrerinformationssystemen kann die Darstellung der Karte bzw. des Anzeigeelements auf dem Monitor mit Hilfe des Dreh-Drückgebers lediglich in horizontaler oder in vertikaler Richtung bewegt werden. Beide Bewegungen- in horizontaler und in vertikaler Richtung - werden über die Bedienfunktion Drehen des Dreh-Drückgebers gesteuert. Durch ein kurzes Drücken des Dreh-Drückgebers kann zwischen den beiden Bewegungsrichtungen umgeschaltet werden.

Aus der EP 1087 359 A2 ist ein Verfahren zum Anordnen von Streckeninformationen innerhalb einer Straßenkarte und ein Navigationsgerät bekannt. Hierbei wird ein Symbol für die Streckeninformation einer einem geografischen Bezugsort der Streckeninformation korrespondierenden Stelle einer Straßenkarte zugeordnet. Hierbei wird grundsätzlich dasjenige Symbol automatisch auf der Anzeigeeinrichtung ausgewählt und hervorgehoben, das der vom Navigationssystem errechneten Position in Fahrtrichtung am nächsten liegt. Ausgehend von dem hervorgehobenen Symbol kann der Benutzer durch Drehen eines Dreh-Druck-Schalters entlang der vom Navigationsgerät berechneten Route von einem Symbol zu einem nächsten Symbol springen oder scrollen. Hierbei wird durch die Drehrichtung des Dreh-Druck-Schalters diejenige Richtung bestimmt, in der von einem Symbol zu einem nächsten Symbol gesprungen wird.

Vorteile der Erfindung

Mit der vorliegenden Erfindung wird ein Verfahren vorgeschlagen, mit dem sich die Darstellung von Bilddaten oder eines Anzeigeelements auf einer zweidimensionalen Wiedergabeeinrichtung mit Hilfe eines Dreh-Drückgebers für einen Benutzer einfach und intuitiv bewegen lässt.

Dies wird erfindungsgemäß dadurch erreicht, dass die Bewegungsrichtung, d. h. die Richtung einer anvisierten Translationsbewegung der Darstellung, eingestellt wird, indem die Bedienfunktion Drehen des Dreh-Drückgebers mit einer Änderung der Bewegungsrichtung verknüpft wird.

Erfindungsgemäß ist erkannt worden, dass sowohl die Verschiebung einer Bilddarstellung als auch die Bewegung eines Anzeigeelements auf einer zweidimensionalen Wiedergabeeinrichtung intuitiv immer auf dem kürzesten Weg zur Zielposition vorgenommen wird. Dazu wird die Zielposition zunächst anvisiert, wozu in der Regel eine Ausrichtung durch Drehen erforderlich ist. Danach kann die Zielposition mit einer Translationsbewegung, also auf dem kürzesten Wege, erreicht werden. Nur wenn sich die Zielposition ändert, bevor die Bewegung abgeschlossen ist, ist der resultierende Bewegungsverlauf von der Ausgangsposition zur endgültigen Zielposition nicht geradlinig. Im Rahmen des erfindungsgemäßen Verfahrens wird der voranstehend beschriebenen, intuitiven Vorgehensweise Rechnung getragen, indem zunächst die Richtung einer anvisierten Translationsbewegung eingestellt wird. Dazu wird die Bedienfunktion Drehen des Dreh-Drückgebers mit einer Änderung der Bewegungsrichtung verknüpft. Diese Verknüpfung ist für einen Benutzer einfach - weil ebenfalls intuitiv - zu erfassen, da die Änderung der Bewegungsrichtung einer Drehbewegung entspricht, die sich gut über eine Dreheinrichtung steuern lässt.

In diesem Zusammenhang erweist es sich als vorteilhaft, wenn der Drehbereich des Dreh-Drückgebers ergonomisch sinnvoll auf den Bereich der Bewegungsrichtung abgebildet wird. Bei einer vorteilhaften Variante des erfindungsgemäßen Verfahrens wird das Ausmaß der Änderung der Bewegungsrichtung $\alpha_T$ durch das zeitliche Integral über die Drehung $\omega_D$ des Dreh-Drückgebers als

$$\alpha_T = f_K \int \omega_D$$

bestimmt, wobei $f_K$ ein Korrekturfaktor ist, der so gewählt wird, dass der Bewegungsrichtungsbereich durch den Drehbereich des Dreh-Drückgebers ergonomisch sinnvoll abgedeckt wird. Die Drehung $\omega_D$ kann als digital gerasterte Größe in sehr feinen Stufen verändert werden.

Die Einstellung der Bewegungsrichtung durch Drehen des Dreh-Drückgebers kann zusätzlich noch dadurch erleichtert werden, dass die aktuell eingestellte Bewegungsrichtung zusammen mit der Darstellung der Bilddaten bzw. des Anzeigeelements als Orientierungshilfe für den Benutzer wiedergegeben wird. Dies gilt insbesondere auch dann, wenn die Darstellung nicht bewegt wird.

Das erfindungsgemäße Verfahren baut auf der Abbildung der beiden Dimensionen der Bewegung auf die beiden Bedienfunktionen Drehen und Drücken des Drehdrückgebers auf. Eine zweidimensionale, translative Bewegung der Darstellung wird hier durch die Größen

- Richtung          $\alpha_T = [-180°, 180°]$     Winkel zur Senkrechten
- Geschwindigkeit    $v_T \geq 0$                Längenmaßeinheit/s

beschrieben. Die Richtung $\alpha_T$ wird, wie voranstehend beschrieben, der Drehung $\omega_D$ des Dreh-Drückgebers zugeordnet, beispielsweise durch die Funktion

$$\alpha_T = f_K \int \omega_D.$$

Die binäre Bedienfunktion Drücken des Drehdrückgebers $D_D = \{0, 1\}$ wird mit der Bewegungsgeschwindigkeit $v_T$ in der aktuell eingestellten Bewegungsrichtung verknüpft. In einer für den Benutzer einfach zu handhabenden Variante wird die Bewegungsgeschwindigkeit $v_T$ gleich Null gesetzt, wenn der Dreh-Drückgeber nicht gedrückt wird, $D_D = 0$. Mit dem Drücken des Dreh-Drückgebers, $D_D = 1$, wächst die Bewegungsgeschwindigkeit $v_T$ bis auf einen Maximalwert $v_{max}$ an, solange der Dreh-Drückgeber gedrückt gehalten wird. In diesem Fall lässt sich $v_T$ beschreiben als

$$v_T = f_K \begin{cases} 0 & \text{wenn } D_D = 0 \\ \min(v_{max}, v(t_D)) & \text{wenn } D_D = 1 \end{cases}$$

wobei $v(t_D)$ eine positive, monoton steigende Funktion der Druckdauer $t_D$ ist.

Bei dem voranstehend beschriebenen erfindungsgemäßen Verfahrens können die Bedienfunktionen Drehen und Drücken des Dreh-Drückgebers gleichzeitig ausgeübt werden. Erst diese parallele Nutzung der beiden Bedienfunktionen ermöglicht eine zweidimensionale Steuerung der Bewegung, also eine Bewegung der Darstellung in beiden Dimensionen der Wiedergabeeinrichtung, bei der die Bewegungsrichtung kontinuierlich, während des Bewegungsvorgangs verändert werden kann.

Wie bereits erwähnt, wird die erfindungsgemäße Handhabung des Dreh-Drückgebers wesentlich vereinfacht, wenn die zu bewegende Darstellung ein Anzeigeelement umfasst, das die aktuell eingestellte Bewegungsrichtung wiedergibt. Das Anzeigeelement kann dazu beispielsweise mit einer Pfeilspitze ausgestattet sein, die immer in die aktuell eingestellte Bewegungsrichtung weist. Da beim Bewegen der Darstellung meist ein bestimmtes Ziel anvisiert wird, geht in einer vorteilhaften Variante von der Darstellung des Anzeigeelements ein Peilstrahl in der aktuell eingestellten Bewegungsrichtung zum Anvisieren eines vorgebbaren Punktes aus. Zum direkten Anvisieren eines Punktes in der Darstellung kann das Anzeigeelement außerdem auch eine Auswahlmarkierung, beispielsweise in Form eines Fadenkreuzes, umfassen.

Zeichnungen

Wie bereits voranstehend ausführlich erörtert, gibt es verschiedene Möglichkeiten, die Lehre der vorliegenden Erfindung in vorteilhafter Weise auszugestalten und weiterzubilden. Dazu wird einerseits auf die dem Patentanspruch 1 nachgeordneten Patentansprüche und andererseits auf die nachfolgende Beschreibung zweier Ausführungsbeispiele der Erfindung anhand der Zeichnungen verwiesen.

Fig. 1     zeigt den durch eine erste Variante des erfindungsgemäßen Verfahrens erzeugten Bewegungsverlauf eines Anzeigeelements auf einer nur schematisch dargestellten geografischen Karte,

Fig. 2 zeigt ein Anzeigeelement, das sich als Richtungsindikator im Rahmen des erfindungsgemäßen Verfahrens eignet.

Beschreibung der Ausführungsbeispiele

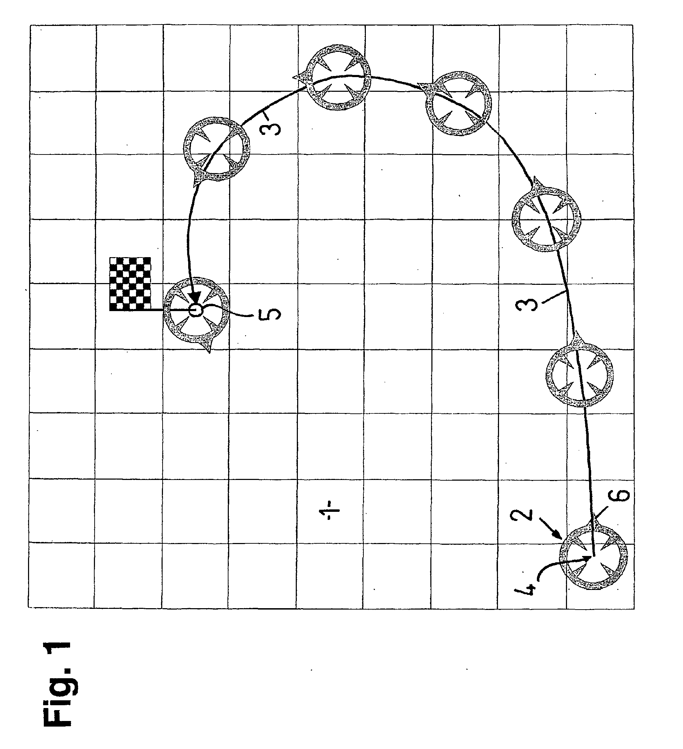

Fig. 1 zeigt zumindest schematisch eine geografische Karte 1, die auf dem Monitor eines Fahrerinformationssystems dargestellt ist. Zusammen mit der Karte 1 ist der Bewegungsverlauf 3 eines Anzeigeelements 2 dargestellt, das mit Hilfe des erfindungsgemäßen Verfahrens von einem Ausgangspunkt 4 zu einem Zielpunkt 5 auf der Karte 1 bewegt worden ist.

Das Anzeigeelement 2 ist in Form eines Kreisrings dargestellt, in dessen Inneres vier auf den Mittelpunkt des Kreisrings weisende Spitzen ragen, was dem Anzeigeelement 2 insgesamt Fadenkreuzcharakter verleiht. Diese Auswahlmarkierung in Form der vier nach Innen weisenden Spitzen dient zum Anvisieren eines vorgebbaren Punkts - hier des Zielpunkts 5 - auf der Karte 1. Das Anzeigeelement 2 umfasst außerdem einen Richtungsindikator für die aktuell eingestellte Bewegungsrichtung, d.h. die Richtung der anvisierten Translationsbewegung des Anzeigeelements 2. Als Richtungsindikator dient hier eine vom äußeren Rand des Kreisrings abragende Pfeilspitze 6, die immer in die aktuell eingestellte Bewegungsrichtung weist.

Die Bewegung des Anzeigeelements 2 auf der zweidimensionalen Wiedergabeeinrichtung wird mit Hilfe eines Dreh-Drückgebers gesteuert, der mit den Bedienfunktionen Drehen und Drücken ausgestattet ist. Entsprechend dem erfindungsgemäßen Verfahren wird die Bewegungsrichtung eingestellt, indem die Bedienfunktion Drehen des DrehDrückgebers mit einer Änderung der Bewegungsrichtung verknüpft wird, so dass ein Drehen des Dreh-Drückgebers eine Rotationsbewegung des Anzeigeelements 2 verursacht, durch die die Pfeilspitze 6 in die Richtung des jeweils anvisierten Punkts auf der Karte 2 gedreht wird.

Die Bedienfunktion Drücken des Drehdrückgebers ist im hier dargestellten Ausführungsbeispiel mit der Bewegungsgeschwindigkeit in der aktuell eingestellten Bewegungsrichtung verknüpft. Dementsprechend ist die Bewegungsgeschwindigkeit gleich Null, wenn der Dreh-Drückgeber nicht gedrückt wird. Die Bewegungsgeschwindigkeit wächst mit dem Drücken des Dreh-Drückgebers bis auf einen Maximalwert $v_{max}$ an, solange der Dreh-Drückgeber gedrückt gehalten wird.

Wesentlich bei der durch Fig. 1 veranschaulichten Variante des erfindungsgemäßen Verfahrens ist, dass die Bedienfunktionen Drehen und Drücken des Dreh-Drückgebers gleichzeitig ausgeübt werden können. So wurde die Bewegungsrichtung bei dem in Fig. 1 dargestellten Bewegungsverlauf 3 zwischen dem Startpunkt 4 und dem Zielpunkt 5 fünfmal verändert, ohne dass die Bewegung unterbrochen werden musste.

Ein anvisierter Punkt kann beispielsweise durch ein längeres Drücken des Dreh-Drückgebers oder einen Doppelklick als Zielpunkt ausgewählt werden oder aber auch mit Hilfe eines weiteren Bedienelements. Durch längeres Drücken des Dreh-Drückgebers oder durch einen Doppelklick könnte auch das Kontextmenü aufgerufen werden, über das - zusätzlich zum Auswählen des Zielpunkts - weitere Funktionen, wie z.B. Maßstabänderungen, aktivierbar sind. Durch Betrachtung des Zeitverlaufs der binären Größe Druck $D_D$ könnte die Funktionalität des Dreh-Drückgebers zusätzlich erweitert werden.

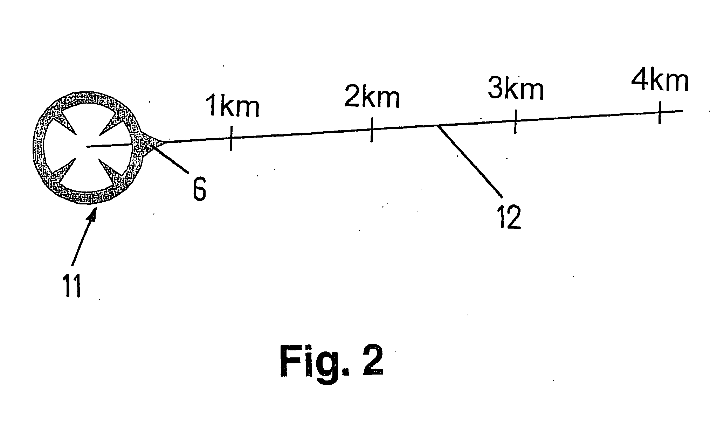

Fig. 2 zeigt ein Anzeigeelement 11, das das Anpeilen eines gewünschten Zielpunkts beispielsweise auf einer geografischen Karte vereinfacht. Das Anzeigeelement 11 umfasst - wie das in den Figuren 1 und 2 dargestellte Anzeigeelement 2 - einen Kreisring, in dessen Inneres vier auf den Mittelpunkt des Kreisrings weisende Spitzen als Auswahlmarkierung ragen. Als Richtungsindikator dient auch hier eine vom äußeren Rand des Kreisrings abragende Pfeilspitze 6. Allerdings geht beim Anzeigeelement 11 von der Pfeilspitze 6 ein Peilstrahl 12 aus, der immer in die aktuell eingestellte Bewegungsrichtung weist und beim Ausrichten des Anzeigeelements 11 mitgedreht wird. Um die Orientierung in der Karte zu erleichtern, ist der Peilstrahl 12 mit einer Entfernungsskala versehen.

An dieser Stelle sei noch darauf hingewiesen, dass es bei einer ausreichenden Kartenzeichnungsperformance auch möglich ist, anstelle des Anzeigeelements mit dem Richtungsindikator die Karte direkt zu drehen und die Verschiebung bezogen auf den Monitor stets in die gleiche Richtung durchzuführen.

Schließlich sei noch erwähnt, dass sich das erfindungsgemäße Verfahren auch in Verbindung mit in sogenannter Birdview-Ansicht dargestellten Karten eignet, die durch eine entsprechende Zuordnung ebenfalls einfach mit Hilfe eines Dreh-Drückgebers bewegt werden können. In Birdview-Ansicht ausgeführte Karten sind typischerweise so dargestellt, als wäre die Karte nach hinten gekippt oder als ob man schräg nach unten auf eine flach liegende Ebene schauen würde.

**Patentansprüche**

1. Verfahren zum Bewegen der Darstellung von Bilddaten und/oder eines Anzeigeelements (2, 8) auf einer zweidimensionalen Wiedergabeeinrichtung mit Hilfe eines Dreh-Drückgebers, der mit den Bedienfunktionen Drehen und Drücken ausgestattet ist, wobei die Bewegungsrichtung, d.h. die Richtung einer anvisierten Translationsbewegung der Darstellung, eingestellt wird, indem die Bedienfunktion Drehen des Dreh-Drückgebers mit einer Änderung der Bewegungsrichtung verknüpft wird, **dadurch gekennzeichnet, dass** die Bedienfunktion Drücken des Dreh-Drückgebers mit der Bewegungsgeschwindigkeit in der aktuell eingestellten Bewegungsrichtung verknüpft wird.

2. Verfahren nach einem der Ansprüche 1, **dadurch gekennzeichnet, dass** das Ausmaß der Änderung der Bewegungsrichtung durch das zeitliche Integral über die Drehung des Dreh-Drückgebers bestimmt wird.

3. Verfahren nach einem der vorhergehenden Ansprüche, **dadurch gekennzeichnet, dass** zusammen mit der Darstellung der Bilddaten bzw. des Anzeigeelements die aktuell eingestellte Bewegungsrichtung der Darstellung wiedergegeben wird.

4. Verfahren nach Anspruch 3, **dadurch gekennzeichnet, dass** das Anzeigeelement zur Darstellung der aktuell eingestellten Bewegungsrichtung eine Pfeilspitze aufweist, die in die aktuell eingestellte Bewegungsrichtung zeigt.

5. Verfahren nach einem der vorhergehenden Ansprüche, **dadurch gekennzeichnet, dass** die Bewegungsgeschwindigkeit gleich Null ist, wenn der Dreh-Drückgeber nicht gedrückt wird, und mit dem Drücken bis auf einen Maximalwert $v_{max}$ anwächst, solange der Dreh-Drückgeber gedrückt gehalten wird.

6. Verfahren nach einem der vorhergehenden Ansprüche, **dadurch gekennzeichnet, dass** die Bedienfunktionen Drehen und Drücken des Dreh-Drückgebers gleichzeitig ausgeübt werden.

7. Verwendung eines Verfahrens nach einem der vorhergehenden Ansprüche zum Bewegen einer auf einer zweidimensionalen Wiedergabeeinrichtung dargestellten geografischen Karte bzw. eines Anzeigeelements auf einer geografischen Karte, insbesondere im Rahmen eines Fahrerinformationssystems.

**Claims**

1. Method for moving the representation of image data and/or a display element (2, 8) on a two-dimensional display arrangement using a rotary pushbutton which is equipped with the rotation and pushing operator control functions, wherein the direction of movement, i.e. the direction of a selected translatory movement of the display, is set by combining the rotation operator control function of the rotary pushbutton with a change in the direction of movement, **characterized in that** the pushing operator control function of the rotary pushbutton is combined with the speed of movement in the currently set direction of movement.

2. Method according to Claim 1, **characterized in that** the degree of change in the direction of movement is determined by the timing integral over the rotation of the rotary pushbutton.

3. Method according to one of the preceding claims, **characterized in that** the currently set direction of movement of the display is represented together with the representation of the image data or of the display element.

4. Method according to Claim 3, **characterized in that** the display element has, for the purpose of representing the currently set direction of movement, an arrow tip which points in the currently set direction of movement.

5. Method according to one of the preceding claims, **characterized in that** the speed of movement is equal to zero if the rotary pushbutton is not pressed and, when it is pressed, increases to a maximum value of $V_{max}$ for as long as the rotary pushbutton is held in the pressed state.

6. Method according to one of the preceding claims, **characterized in that** the rotation and pushing operator control functions of the rotary pushbutton are carried out simultaneously.

7. Use of a method according to one of the preceding claims for moving a geographic map or a display element, represented on a two-dimensional display arrangement, on a geographic map, in particular within the scope of a driver information system.

**Revendications**

1. Procédé de déplacement de la présentation de données d'image et/ou d'un élément d'affichage (2, 8) sur un dispositif bidimensionnel de reproduction à l'aide d'un dispositif de poussée et de rotation qui est doté des fonctions d'actionnement en poussée et en rotation, la direction de déplacement, c'est-à-dire la direction du déplacement de translation envisagé pour la représentation, étant réglée en associant la fonction d'actionnement en rotation du dispositif de poussée et de rotation à une modification de la direction du déplacement,
**caractérisé en ce que**
la fonction d'actionnement en poussée du dispositif de poussée et de rotation est associée à la vitesse de déplacement dans la direction de déplacement réglée à chaque instant.

2. Procédé selon la revendication 1, **caractérisé en ce que** l'amplitude de la modification de la direction de déplacement est définie par l'intégrale temporelle de la rotation du dispositif de poussée et de rotation.

3. Procédé selon l'une des revendications précédentes, **caractérisé en ce que** la direction de déplacement de la représentation réglée à chaque instant est présentée en même temps que les données d'image et que l'élément d'affichage.

4. Procédé selon la revendication 3, **caractérisé en ce que** l'élément d'affichage présente pour la représentation de la direction de déplacement réglée à tout instant la pointe d'une flèche qui montre la direction de déplacement réglée à cet instant.

5. Procédé selon l'une des revendications précédentes, **caractérisé en ce que** la vitesse de déplacement est nulle lorsque le dispositif de poussée et de rotation n'est pas poussé et **en ce que** tant que le dispositif de poussée et de rotation est maintenu enfoncé, cette vitesse croît jusqu'à une valeur maximale $v_{max}$ lorsque la poussée augmente.

6. Procédé selon l'une des revendications précédentes, **caractérisé en ce que** les fonctions d'actionnement en rotation et d'actionnement en poussée du dispositif de poussée et de rotation sont exécutées simultanément.

7. Utilisation d'un procédé selon l'une des revendications précédentes pour déplacer une carte géographique ou un élément d'affichage d'une carte géographique représentés sur un dispositif de reproduction bidimensionnelle, en particulier dans le contexte d'un système d'information d'un conducteur.

Fig. 1

EP 1 273 885 B1

EP 1 273 885 B1

1km   2km   3km   4km

6

12

11

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1087359 A2